# EUROPÄISCHE PATENTSCHRIFT

(11) **EP 2 550 201 B1**
(45) Veröffentlichungstag und Bekanntmachung des Hinweises auf die Patenterteilung: **16.07.2014**
(21) Anmeldenummer: 11709921.8
(22) Anmeldetag: 17.03.2011
(51) Int. Cl.: B64D 13/06, B64D 11/06

(54) **FLUGZEUG UND VERFAHREN ZUR KLIMATISIERUNG ZUMINDEST EINES TEILBEREICHES DES INNENRAUMES EINES FLUGZEUGES**
AIRPLANE AND METHOD FOR AIR CONDITIONING OF AT LEAST A SUBAREA OF AN AIRPLANE
AVION ET MÉTHODE POUR LA CLIMATISATION D'AU MOINS UNE ZONE PARTIELLE D'UN AVION

(30) Priorität: 20.03.2010 DE 102010012143
(43) Veröffentlichungstag der Anmeldung: 30.01.2013
(73) Patentinhaber: Fraunhofer-Gesellschaft zur Förderung der angewandten Forschung, 80686 München (DE)
(72) Erfinder: NÖSKE, Iris, 83026 Rosenheim (DE); GRÜN, Gunnar, 80639 München (DE)
(74) Vertreter: Andrae | Westendorp Patentanwälte Partnerschaft
(86) Internationale Anmeldenummer: PCT/EP2011/054053
(87) Internationale Veröffentlichungsnummer: WO 2011/117142

(56) Entgegenhaltungen:
- EP-A1- 1 600 375
- EP-A1- 2 096 033
- DE-A1- 19 824 191
- DE-A1-102006 041 030
- DE-A1-102007 049 926
- DE-C1- 19 534 025

## Beschreibung

Die Erfindung betrifft ein Flugzeug mit zumindest einem Zuluftkanal und zumindest einem Abluftkanal und zumindest einem Sitz, wobei der Zuluftkanal und der Abluftkanal und der Sitz im Innenraum des Flugzeuges angeordnet sind und der Sitz ein Sitzgestell, mit welchem der Sitz an einem Teil des Rumpfes befestigt ist, und eine Sitzfläche und/oder eine optionale Rückenlehne und/oder eine optionale Armlehne enthält.

Aus der DE 10 2007 049 926 A1, welche als nächster Stand der Technik angesehen wird, ist ein Flugzeug der eingangs genannten Art bekannt. Gemäß diesem Stand der Technik wird der Passagierkabine mittels eines Zuluftkanals im Bodenbereich Zuluft bzw. aufbereitete Luft zugeführt. Diese wird dann durch die Passagiere und andere thermische Lasten erwärmt und steigt infolgedessen innerhalb der Kabine auf. Am höchsten Punkt der Kabine befindet sich ein Abluftkanal, über welchen die verbrauchte Luft aus der Kabine abgesaugt wird.

Dieses vorbekannte System zur Klimatisierung erlaubt jedoch keine individuelle Beeinflussung der Luftqualität bzw. der Luftmenge durch die einzelnen Passagiere. Der Erfindung liegt daher die Aufgabe zugrunde, einzelnen Passagieren bzw. Benutzern des Flugzeuges eine individuelle Klimaregelung zu ermöglichen.

Die Aufgabe wird erfindungsgemäß gelöst durch ein Flugzeug gemäß Anspruch 1 und ein Verfahren gemäß Anspruch 11. Erfindungsgemäß wird vorgeschlagen, dem Innenraum eines Flugzeuges die Zuluft über zumindest ein Ausströmelement zuzuführen, welches mit zumindest einem Flugzeugsitz verbunden ist bzw. Teil des Flugzeugsitzes ist. Auf diese Weise kann innerhalb der Flugzeugkabine ein Mikroklima geschaffen werden, welches in etwa einen Raumbereich erfasst, den ein einzelner Passagier einnimmt. Somit kann die Kabinenklimatisierung individuell vom jeweiligen Passagier beeinflusst werden. Weiterhin vermeidet das vorgeschlagene Belüftungs- bzw. Klimatisierungssystem das Auftreten von Zugluft, so dass das Wohlbefinden der Passagiere innerhalb des Flugzeuges gesteigert wird.

Gemäß der Erfindung ist das Ausströmelement unter der Sitzfläche angebracht und dazu eingerichtet, einen Luftstrom in Richtung des Bodens des Innenraums bzw. in Bodennähe des Flugzeuges einzubringen. Auf diese Weise entsteht unterhalb des Sitzes eine Verdrängungsströmung, so dass die zugeführte Zuluft langsam an den Passagieren entlang aufsteigt. Hierdurch kann das Auftreten von Zugluft zuverlässig verhindert werden. Unter Bodennähe wird in einigen Ausführungsformen der Erfindung ein Bereich zwischen 0 cm und 30 cm verstanden. In anderen Ausführungsformen der Erfindung bezeichnet der Begriff bodennah einen Bereich zwischen 10 cm und 25 cm oder zwischen 15 cm und 20 cm, jeweils vom Kabinenboden gemessen. In einigen Ausführungsformen der Erfindung wird die Zuluft bodennah eingebracht, der Luftstrom ist jedoch nicht oder nicht vollständig in Richtung des Kabinenbodens gerichtet.

In einigen Ausführungsformen der Erfindung kann das Flugzeug bzw. das Sitzgestell weiterhin ein Luftführungselement mit einem ersten Ende und einem zweiten Ende aufweisen, wobei das erste Ende des Luftführungselementes mit dem Zuluftkanal verbunden ist und das zweite Ende des Luftführungselementes mit dem Ausströmelement verbunden ist. Auf diese Weise kann das Ausströmelement frei im Bereich des Sitzes angeordnet werden.

In einigen Ausführungsformen der Erfindung kann das Ausströmelement in der Sitzfläche und/oder der Rückenlehne und/oder der Armlehne des Sitzes integriert sein. Hierdurch kann eine Beheizung und/oder Belüftung der Kontaktfläche des Passagiers mit dem Sitz erfolgen. Dadurch wird ein Wärmestau zwischen dem Körper des Passagiers und dem Sitz zuverlässig verhindert. In anderen Ausführungsformen der Erfindung kann Zuluft durch den oberen Teil der Rückenlehne unmittelbar in den Kopfbereich des Passagiers herangeführt werden. In weiteren Ausführungsformen der Erfindung kann ein Ausströmelement in der Rückenlehne des Sitzes so angeordnet sein, dass dieses Zuluft für den dahinter sitzenden Passagier bereit stellt.

In einigen Ausführungsformen der Erfindung kann das Flugzeug weiterhin einen Abluftkanal aufweisen, welcher an der Decke des Innenraumes verläuft. Auf diese Weise kann die verbrauchte Luft, welche durch die in der Flugzeugkabine befindlichen thermischen Lasten erwärmt wurde, durch natürliche Konvektion aufsteigen und am höchsten Punkt der Kabine abgesaugt werden.

Als thermische Lasten im Innenraum des Flugzeuges kommen insbesondere die Passagiere sowie die im Innenraum angeordneten elektrischen Energieverbraucher in Frage. Insbesondere kann dies die eingebaute Unterhaltungselektronik sein.

In einigen Ausführungsformen der Erfindung weist das Flugzeug weiterhin zumindest eine Steuereinrichtung auf, mittels welcher die aus den Ausströmelementen austretende Luftmenge und/oder die Lufttemperatur und/oder die Strömungsgeschwindigkeit beeinflussbar ist. In einigen Ausführungsformen der Erfindung kann die Steuereinrichtung in Griffweite des Passagiers angeordnet sein, so dass dieser die aus seinem Sitz bzw. im Bereich seines Sitzes ausströmende Luftmenge und/oder deren Temperatur und/oder deren Strömungsgeschwindigkeit beeinflussen kann. Die Steuereinrichtung kann in einigen Ausführungsformen der Erfindung auch eine Regeleinrichtung sein bzw. eine Regeleinrichtung enthalten, so dass die Luftmenge, die Lufttemperatur und/oder die Strömungsgeschwindigkeit auf vorgebbare Sollwerte geregelt werden kann.

Die über den zumindest einen Zuluftkanal und die Ausströmelemente zugeführte Luft kann in einigen Ausführungsformen der Erfindung eine Mischluft sein, welche in einem Mischluftsystem aufbereitet wurde. Dem Mischluftsystem kann die über den Abluftkanal aus der Kabine entnommene Abluft zumindest teilweise zugeführt werden. Weiterhin kann dem Mischluftsystem Zuluft zugeführt werden. In einigen Ausführungsformen kann die Zuluft mittels eines Verdichters zugeführt werden. In einigen Ausführungsformen kann die Zuluft Triebwerkszapfluft enthalten oder daraus bestehen. Die im Mischluftsystem aufbereitete Luft wird dann über den Zuluftkanal und die Ausströmelemente wieder der Kabine zugeführt. Die Aufbereitung der Luft kann eine Filterung und/oder eine Befeuchtung und/oder weitere Maßnahmen umfassen.

Nachfolgend soll die Erfindung anhand von Figuren ohne Beschränkung des allgemeinen Erfindungsgedankens näher erläutert werden. Dabei zeigt:
Figur 1 einen Querschnitt durch den Rumpf eines Flugzeuges, welches mit dem erfindungsgemäßen Klimatisierungssystem ausgestattet ist.
Figur 2 zeigt die Seitenansicht eines erfindungsgemäß ausgestatteten Sitzes.
Figur 3 zeigt eine Ausführungsform eines Ausströmelementes.

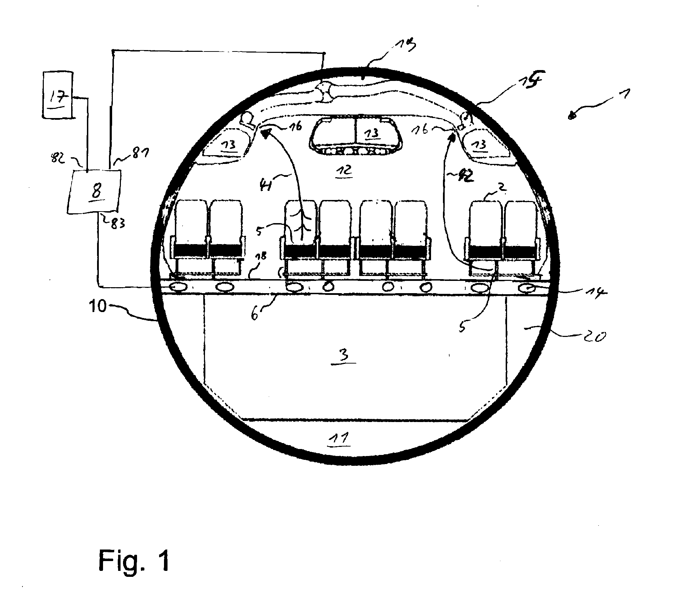

Figur 1 zeigt einen Querschnitt durch den Rumpf 10 eines Flugzeuges 1. Der Rumpf 10 ist durch einen Zwischenboden 18 unterteilt. Unterhalb des Zwischenbodens 18 ist ein Frachtraum 3 angeordnet. Oberhalb des Zwischenbodens 18 befindet sich eine Passagierkabine 12.

Der Frachtraum 3, die Bilge 11, der Dreiecksbereich 20 und die Passagierkabine 12 werden beim Reiseflug in großen Höhen mit Druckluft beaufschlagt, so dass der Innendruck im Rumpf 10 größer ist als der Druck der umgebenden Atmosphäre. Weiterhin können der Frachtraum 3, die Bilge 11, der Dreiecksbereich 20 und die Passagierkabine 12 auf eine vorgebbare Temperatur klimatisiert werden und/oder ein regelmäßiger Luftaustausch und/oder eine Luftaufbereitung erfolgen. In der Passagierkabine 12 wird von den Passagieren Sauerstoff verbraucht und CO₂ abgegeben. Weiterhin befindet sich in der Passagierkabine 12 elektronische Ausrüstung, welche zusätzliche thermische Lasten generiert, beispielsweise ein Inflight-Entertainment-System. Die Anforderungen an die Klimatisierung sind daher in der Passagierkabine 12 meist größer als in den übrigen Bereichen. Daher kann die Klimatisierung in einigen Ausführungsformen auf die Passagierkabine 12 beschränkt sein. Für die Passagierkabine 12 wird daher in der nachstehenden Beschreibung auch der Begriff Innenraum synonym gebraucht.

Im Innenraum 12 befinden sich Sitze 2. Dargestellt ist eine 2-4-2 Konfiguration. Selbstverständlich ist die Erfindung nicht auf diese Sitzanordnung beschränkt. Vielmehr können auch andere Sitzanordnungen vorgesehen sein. Oberhalb der Sitze 2 in Richtung der Kabinendecke 19 befinden sich optionale Staufächer 13, welche zur Aufnahme des Handgepäcks der Passagiere dienen.

Unterhalb bzw. innerhalb des Zwischenbodens 18 befindet sich zumindest ein Zuluftkanal 14. In der dargestellten Ausführungsform sind exemplarisch 8 Zuluftkanäle vorgesehen. In anderen Ausführungsformen der Erfindung kann die Anzahl der Zuluftkanäle größer oder auch kleiner sein und in einigen Ausführungsformen zwischen 1 und 60 liegen. Die Form des Querschnittes der Zuluftkanäle kann in einigen Ausführungsformen der Erfindung variieren.

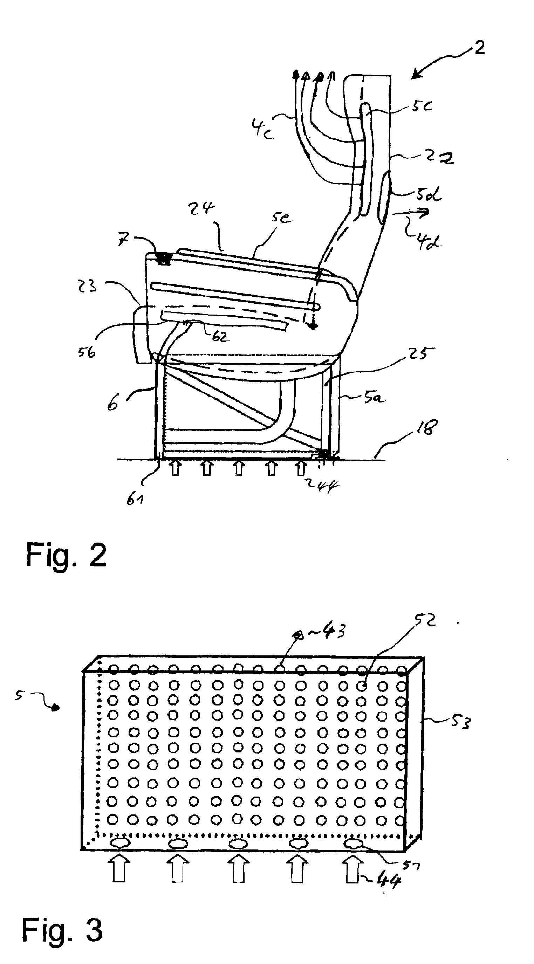

Am Sitz 2 befindet sich zumindest ein Ausströmelement 5, wie in Zusammenhang mit Figur 2 noch näher erläutert wird. Das Ausströmelement 5 dient dazu, dem Innenraum Luft aus zumindest einem Zuluftkanal 14 zuzuführen. Weiterhin kann das Ausströmelement 5 die der Kabine zugeführte Luftmenge oder die Ausblasrichtung durch entsprechende Steuerelemente beeinflussen. Als Steuerelement kann eine Klappe und/oder eine Düse und/oder eine Mehrzahl von beweglichen Lamellen verwendet werden. Das Ausströmelement 5 ist an zumindest einen Zuluftkanal 14 angeschlossen, so dass die im Zuluftkanal 14 strömende Luft durch das Ausströmelement 5 in die Passagierkabine 12 austreten kann.

Dargestellt ist in Figur 1 an der Backbordseite des Flugzeuges ein Ausströmelement 5, welches im Bodenbereich bzw. am Sitzgestell angeordnet ist. Dieses Ausströmelement erzeugt eine Verdrängungsströmung 42 unterhalb des zugeordneten Sitzes 2, so dass die verbrauchte Luft nach oben in Richtung der Kabinendecke 19 aufsteigt. Anhand der Mittelreihe ist an der Steuerbordseite des Flugzeuges die Wirkungsweise eines weiteren Ausströmelementes 5 gezeigt. Das Ausströmelement 5 befindet sich in der Sitzfläche und/oder der Rückenlehne des Sitzes 2. Die Luft wird aus einem Zuluftkanal 14 entnommen und dem Ausströmelement 5 über ein Luftführungselement 6 zugeführt. Die Luft strömt dann aus der Sitzfläche und/oder der Rückenlehne zwischen der Kontaktfläche des Passagiers und dem Sitz aus und bildet eine aufsteigende Luftströmung 41, welche ebenfalls in Richtung der Kabinendecke 19 strömt. Mit einer solchen Strömung kann eine individuelle Beheizung und/oder Belüftung am Platz des Passagiers vorgenommen werden.

Die aufsteigenden Luftströmungen 41 und 42 werden über zumindest einen Abluftkanal 15 abgesaugt. Zwischen dem Abluftkanal 15 und dem Innenraum 12 können Lüftungselemente bzw. Einströmelemente 16 angeordnet sein, welche die dem Abluftkanal 15 zugeführte Luftmenge beeinflussen können.

In einigen Ausführungsformen kann das Flugzeug 1 mit einem Mischluftsystem 8 versehen sein. Das Mischluftsystem 8 weist dabei zumindest zwei Eingänge 81 und 82 und zumindest einen Ausgang 83 auf. Am ersten Eingang 81 wird dem Mischluftsystem 8 die Luft aus dem Abluftkanal 15 zumindest teilweise zugeführt. Dabei kann vorgesehen sein, einen Teil der im Abluftkanal 15 vorhandenen Luft über ein Auslassventil ins Freie abzuführen und durch Zuluft zu ersetzen, so dass die Luftmenge in der Kabine konstant bleibt. In einigen Ausführungsformen kann die aus dem Abluftkanal 15 entnommene Luft vor dem Wiedereintritt in die Kabine aufbereitet werden. Die Aufbereitung kann beispielsweise eine Filterung von Staubteilchen oder Keimen umfassen. In einigen Ausführungsformen kann die Aufbereitung auch eine Trocknung und/oder eine Befeuchtung umfassen.

Am zweiten Eingang 82 des Mischluftsystems 8 kann Zuluft zugeführt werden. Aufgrund des niedrigen Umgebungsdruckes in großen Flughöhen kann die Zuluft am Eingang 82 mittels eines Verdichters 17 auf einen erhöhten Druck gebracht werden. Als Verdichter 17 kann in einigen Ausführungsformen der Erfindung der Verdichter von zumindest einem Triebwerk eingesetzt werden, welcher verdichtete und erwärmte Triebwerkszapfluft am zweiten Eingang 82 bereitstellt.

Der Ausgang 83 des Mischluftsystems 8 ist dann mit dem zumindest einen Zuluftkanal 14 verbunden, welcher die vom Mischluftsystem 8 bereitgestellte Luft an die Ausströmelemente 5 weiterleitet.

Figur 2 zeigt einen an sich bekannten Flugzeugsitz 2. Der Sitz 2 weist eine Sitzfläche 23 auf und eine Rückenlehne 22. Die Lehne 22 kann beweglich mit der Sitzfläche 23 verbunden sein und vom Passagier individuell verstellt werden. Weiterhin kann der Sitz 2 eine Armlehne 24 aufweisen. Die Armlehne 24 kann fest oder beweglich am Sitz 2 verbunden sein. Der Sitz 2 ist mittels eines Sitzgestells 25 mit dem Boden 18 des Innenraumes 12 verbunden.

In Figur 2 weist der Sitz 2 weiterhin eine Mehrzahl von Ausströmelementen 5 auf. Dabei muss nicht in jeder Ausführungsform der Erfindung jedes dargestellte Ausströmelement vorhanden sein. Vielmehr können in einigen Ausführungsformen der Erfindung nur einzelne Ausströmelemente 5 am Sitz 2 angeordnet sein. In anderen Ausführungsformen der Erfindung kann auch eine Mehrzahl von Ausströmelementen 5 vorgesehen sein.

Das Ausströmelement 5a befindet sich seitlich am Sitzgestell 25. Das Ausströmelement 5a kann dazu eingerichtet sein, unterhalb des Sitzes 2 bzw. unterhalb der Sitzfläche 23 eine Verdrängungsströmung zu erzeugen, so dass die verbrauchte Luft in Richtung der Kabinendecke 19 aufsteigt. Ein Ausströmelement 5b kann innerhalb bzw. unterhalb der Sitzfläche 23 angeordnet sein. Das Ausströmelement 5b kann eine nach oben gerichtete Strömung erzeugen, welche durch die Sitzfläche 23 austritt und damit eine unmittelbare Beheizung und/oder Kühlung und/oder Belüftung der Kontaktfläche zwischen dem Sitz 2 und dem Passagier ermöglicht. In anderen Ausführungsformen der Erfindung kann das Ausströmelement 5b alternativ oder zusätzlich eine nach unten in Richtung des Kabinenbodens 18 gerichtete Strömung bzw. eine in Bodennähe eintretende Luftströmung erzeugen, um auf diese Weise eine Verdrängungsströmung bereitzustellen, wie in Zusammenhang mit dem Ausströmelement 5a erläutert. In der Rückenlehne 22 kann ein Ausströmelement 5c vorgesehen sein, welches eine nach vorne gerichtete Strömung 4c bereitstellt. Die Strömung 4c kann ebenfalls zur Belüftung, Kühlung und/oder Beheizung der mit dem Passagier in Kontakt stehenden Teilfläche der Rückenlehne 22 ermöglichen. Weiterhin kann in der Rückenlehne 22 ein Ausströmelement 5d angeordnet sein, welches eine Strömung 4d erzeugt. Die Strömung 4d dient dabei der Belüftung des Luftraumes desjenigen Passagiers, welcher den Sitzplatz hinter dem dargestellten Sitz 2 benutzt.

Die Ausströmelemente 5 können wie anhand des Elementes 5a dargestellt, unmittelbar mit einem Zuluftkanal unterhalb des Kabinenbodens 18 verbunden sein. Sofern die Ausströmelemente einen größeren Abstand vom Kabinenboden 18 aufweisen, beispielsweise das Ausströmelement 5b, können diese mittels eines Luftführungselementes 6 mit dem unterhalb des Bodens 18 verlaufenden Zuluftkanal 14 verbunden sein. Hierzu weist das Luftführungselement 6 zumindest ein erstes Ende 61 und zumindest ein zweites Ende 62 auf. Das erste Ende 61 ist dabei an den Zuluftkanal 14 angeschlossen und das zweite Ende 62 mit dem Ausströmelement 5b verbunden. In gleicher Weise können auch die Ausströmelemente 5c, 5d und 5e über weitere Luftführungselemente 6 mit dem Zuluftkanal 14 verbunden sein. Das Luftführungselement 6 kann entlang des Sitzgestelles 25 verlaufen oder als rohrförmiges Element unmittelbar Bestandteil des Sitzgestelles 25 sein. In diesem Fall kann das erste Ende 61 Teil des Befestigungssystems des Sitzgestells 25 am Boden 18 des Innenraumes sein und somit gleichzeitig eine fluiddichte Verbindung zum Zuluftkanal 14 und eine mechanische Befestigung bereitstellen.

Weiterhin kann ein Ausströmelement 5e in der Armlehne 24 angeordnet sein. Ein solches Ausströmelement 5e erlaubt dem Passagier das Mikroklima im Bereich seines Sitzes zu beeinflussen, so dass der Passagier eine individuelle Zuluftzufuhr und/oder eine individuelle Temperatur an seinem Sitzplatz einstellen kann.

In einigen Ausführungsformen der Erfindung kann in der Armlehne 24 eine Steuereinrichtung 7 vorgesehen sein. Mit der Steuereinrichtung 7 kann der Passagier die aus den Ausströmelementen 5 seines Sitzes 2 austretende Luftmenge und/oder die Lufttemperatur und/oder die Strömungsgeschwindigkeit und/oder die Ausströmrichtung individuell beeinflussen.

Figur 3 zeigt eine Ausführungsform eines Ausströmelementes 5. Das in Figur 3 dargestellte Ausströmelement weist einen in etwa quaderförmigen Hohlkörper 53 auf. Selbstverständlich ist die Grundform des Hohlkörpers 53 nur beispielhaft gewählt und kann in anderen Ausführungsformen der Erfindung eine andere Gestalt annehmen. Im Rahmen der Erfindung können Modifikationen und Änderungen an der Form und der Anzahl und der Anordnung der Öffnungen vorgenommen werden, um das Ausströmelement 5 an die jeweilige Einbausituation am Sitz 2 anzupassen. Der Hohlkörper kann als Luftverteiler der Zuluft und/oder als Luftmischer verschiedener Zuluftströme und/oder als Schalldämpfer zur Reduktion der Ausströmgeräusche der Zuluft dienen.

Der Hohlkörper 53 weist an seiner Unterseite zumindest eine Öffnung 51 auf, mittels welcher er an zumindest einem Zuluftkanal 14 angeschlossen ist. Die Verbindung zwischen den Öffnungen 51 und dem Zuluftkanal 14 kann unmittelbar hergestellt sein und/oder mittels zusätzlicher Luftführungselemente 6 erfolgen. Hierdurch kann eine Luftmenge 44 in den Innenraum des Ausströmelementes 5 bzw. dessen Hohlkörper 53 eintreten.

An einer weiteren Außenfläche des Hohlkörpers 53 befindet sich zumindest eine Austrittsöffnung 52. Dargestellt ist eine größere Anzahl Austrittsöffnungen 52, welche in etwa rasterförmig an der Austrittsfläche des Ausströmelementes 5 angeordnet sind. Hierdurch kann eine große Luftmenge mit niedriger Strömungsgeschwindigkeit in den Innenraum 12 eingelassen werden, so dass unangenehme Zuglufterscheinungen und/oder laute Ausströmgeräusche vermieden werden. Die aus dem Zuluftkanal 14 entnommene Luft strömt schließlich über die Austrittsöffnungen 52 als Zuluft 43 in den Innenraum 12.

Das in Figur 3 dargestellte Ausströmelement 5 kann beispielsweise als seitlich montiertes Ausströmelement 5a am Sitzgestell 25 befestigt sein, wie anhand von Figur 2 erläutert. Alternativ kann das in Figur 3 dargestellte Ausströmelement 5 auch in einer gedrehten Stellung innerhalb oder unterhalb der Sitzfläche 23 und/oder der Lehne 22 eingesetzt werden.

Selbstverständlich ist die Erfindung nicht auf die in der Figur und den Ausführungsbeispielen dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Flugzeug mit einem Innenraum (12) und zumindest einem Zuluftkanal (14) und zumindest einem Abluftkanal (15) und zumindest einem Sitz (2), wobei der Abluftkanal (15) mit zumindest einem Einströmelement in Verbindung steht, welches an der Decke (19) des Innenraumes (12) angeordnet ist und der Sitz (2) zumindest ein Sitzgestell (25), und zumindest eine Sitzfläche (23) und/oder zumindest eine optionale Rückenlehne (22) und/oder zumindest eine optionale Armlehne (24) enthält,
**dadurch gekennzeichnet, dass**
der Sitz (2) weiterhin zumindest ein Ausströmelement (5) enthält, mittels welchem dem Innenraum (12) des Flugzeuges (1) Luft aus dem Zuluftkanal (14) zuführbar ist, wobei das Ausströmelement (5) unter der Sitzfläche (23) angeordnet und dazu eingerichtet ist, unterhalb des Sitzes eine Verdrängungsströmung zu erzeugen.

2. Flugzeug nach Anspruch 1, **dadurch gekennzeichnet, dass** das Ausströmelement (5) dazu eingerichtet ist, einen Luftstrom (4) in Richtung des Boden (18) und/oder in Bodennähe des Innenraums (12) des Flugzeuges (1) einzubringen.

3. Flugzeug nach einem der Ansprüche 1 oder 2, weiterhin enthaltend zumindest ein Luftführungselement (6) mit einem ersten Ende (61) und einem zweiten Ende (62), wobei
• das erste Ende (61) des Luftführungselementes (6) mit dem Zuluftkanal verbunden ist und
• das zweite (62) Ende des Luftführungselementes (6) mit dem Ausströmelement (5) verbunden ist.

4. Flugzeug nach einem der Ansprüche 2 oder 3, **dadurch gekennzeichnet, dass** das Luftführungselement (6) im Sitzgestell (25) integriert ist.

5. Flugzeug nach einem der Ansprüche 1 bis 4, **dadurch gekennzeichnet, dass** das Ausströmelement (5) in der Sitzfläche (23) und/oder der Rückenlehne (22) und/oder der Armlehne (24) des Sitzes (2) integriert ist.

6. Flugzeug nach einem der Ansprüche 1 bis 5, **dadurch gekennzeichnet, dass** das Ausströmelement (5) einen Hohlkörper (53) aufweist.

7. Flugzeug nach Anspruch 6, **dadurch gekennzeichnet, dass** der Hohlkörper (53) über zumindest eine Öffnung (51) mit zumindest einem Zuluftkanal (14) verbunden ist.

8. Flugzeug nach einem der Ansprüche 6 bis 7, **dadurch gekennzeichnet, dass** der Hohlkörper (53) eine Mehrzahl von Austrittsöffnungen (52) aufweist.

9. Flugzeug nach einem der Ansprüche 1 bis 8, weiterhin enthaltend zumindest eine Steuereinrichtung (7), mittels welcher die aus dem Ausströmelement (5) austretende Luftmenge und/oder die Lufttemperatur und/oder die Strömungsgeschwindigkeit beeinflussbar ist.

10. Flugzeug nach einem der Ansprüche 1 bis 9, weiterhin enthaltend zumindest ein Mischluftsystem (8) mit zumindest einem ersten Eingang (81), welchem Luft aus dem Abluftkanal (15) zuführbar ist und zumindest einem zweiten Eingang (82), welchem Zuluft zuführbar ist und zumindest einem Ausgang (83), welcher mit dem Zuluftkanal (14) verbunden ist.

11. Verfahren zur Klimatisierung zumindest eines Teilbereiches des Innenraumes (12) eines Flugzeuges (1), bei welchem Zuluft mittels zumindest einem Ausströmelement (5) dem Innenraum (12) zugeführt und Abluft zumindest an der Decke (19) des Innenraumes (12) über zumindest ein Einströmelement abgesaugt wird, **dadurch gekennzeichnet, dass** das Ausströmelement (5) Teil eines Sitzes (2) ist, welcher im Innenraum (12) des Flugzeuges (1) angeordnet ist, und unterhalb des Sitzes eine Verdrängungsströmung erzeugt wird.

12. Verfahren nach Anspruch 11, **dadurch gekennzeichnet, dass** dem Ausströmelement (5) Luft über ein Luftführungselement (6) zugeführt wird, welches Teil des Sitzgestelles (25) des Sitzes (2) ist.

13. Verfahren nach Anspruch 11 oder 12, **dadurch gekennzeichnet, dass** mittels einer Steuereinrichtung (7) die austretende Luftmenge und/oder die Temperatur und/oder die Geschwindigkeit beeinflusst wird.

14. Verfahren nach einem der Ansprüche 11 bis 13, **dadurch gekennzeichnet, dass** der Luftstrom des Ausströmelementes (5) in Richtung des Bodens gelenkt und/oder in Bodennähe eingebracht wird.

15. Verfahren nach Anspruch 14, **dadurch gekennzeichnet, dass** der Luftstrom des Ausströmelementes (5) in einem Bereich zwischen 0 cm und 30 cm oberhalb des Kabinenbodens (18) eingebracht wird.

## Claims

1. Aircraft having an interior (12) and at least one supply air duct (14) and at least one exhaust air duct (15) and at least one seat (2), wherein the exhaust air duct (15) communicates with at least one inflow element which is arranged at the ceiling (19) of the interior (12) and the seat (2) contains at least one seat frame (25) and at least one seating surface (23) and/or at least one optional back rest (22) and/or at least one optional arm rest (24),
**characterized in that**
the seat (2) also contains at least one outflow element (5), by means of which air from the supply air duct (14) can be supplied to the interior (12) of the aircraft (1), wherein the outflow element (5) is arranged below the seating surface (23) and is adapted to produce a displacement flow below the seat.

2. Aircraft according to claim 1, **characterized in that** the outflow element (5) is adapted to introduce an air flow (4) towards the floor (18) and/or close to the floor of the interior (12) of the aircraft (1).

3. Aircraft according to any of claims 1 or 2, further comprising at least one air guiding element (6) having a first end (61) and a second end (62), wherein
• the first end (61) of the air guiding element (6) is connected to the supply air duct, and
• the second (62) end of the air guiding element (6) is connected to the outflow element (5).

4. Aircraft according to any of claims 2 or 3, **characterized in that** the air guiding element (6) is integrated into the seat frame (25).

5. Aircraft according to any of claims 1 to 4, **characterized in that** the outflow element (5) is integrated into the seating surface (23) and/or the back rest (22) and/or the arm rest (24) of the seat (2).

6. Aircraft according to any of claims 1 to 5, **characterized in that** the outflow element (5) has a hollow body (53).

7. Aircraft according to claim 6, **characterized in that** the hollow body (53) is connected to at least one supply air duct (14) via at least one opening (51).

8. Aircraft according to any of claims 6 to 7, **characterized in that** the hollow body (53) has a plurality of outlet openings (52).

9. Aircraft according to any of claims 1 to 8, further comprising at least one control device (7), by means of which the amount of air leaving the outflow element (5) and/or the air temperature and/or the flow speed can be influenced.

10. Aircraft according to any of claims 1 to 9, further comprising at least one mixed air system (8) including at least one first inlet (81) to which air can be supplied from the exhaust air duct (15) and at least one second inlet (82) to which supply air can be supplied and at least one outlet (83) which is connected to the supply air duct (14).

11. Method for air-conditioning at least one subarea of the interior (12) of an aircraft (1) where supply air is supplied to the interior (12) by means of at least one outflow element (5) and exhaust air is sucked off at least at the ceiling (19) of the interior (12) through at least one inflow element, **characterized in that** the outflow element (5) is part of a seat (2) which is arranged in the interior (12) of the aircraft (1) and a displacement flow is produced below the seat.

12. Method according to claim 11, **characterized in that** air is supplied to the outflow element (5) through an air guiding element (6) which is part of the seat frame (25) of the seat (2).

13. Method according to claim 11 or 12, **characterized in that** the leaving air amount and/or the temperature and/or the speed is influenced by means of a control device (7).

14. Method according to any of claims 11 to 13, **characterized in that** the air flow of the outflow element (5) is directed towards the floor and/or is introduced in the vicinity of the floor.

15. Method according to claim 14, **characterized in that** the air flow of the outflow element (5) is introduced into an area between 0 cm and 30 cm above the cabin floor (18).

## Revendications

1. Avion avec une cabine intérieure (12) et au moins un canal d'air frais (14) et au moins un canal d'air vicié (15) et au moins un siège (2), dans lequel le canal d'air vicié (15) est en liaison avec au moins un élément d'écoulement entrant, qui est agencé au plafond (19) de la cabine intérieure (12), et le siège (2) contient au moins un châssis de siège (25) et au moins une surface d'assise (23) et/ou au moins un dossier de siège optionnel (22) et/ou au moins un accoudoir optionnel (24),
**caractérisé en ce que**
le siège (2) contient en outre au moins un élément d'écoulement sortant (5) au moyen duquel de l'air provenant du canal d'air frais (14) peut être amené à la cabine intérieure (12) de l'avion (1), dans lequel l'élément d'écoulement sortant (5) est agencé au-dessous de la surface d'assise (23), et est conçu pour engendrer au-dessous du siège un écoulement de refoulement.

2. Avion selon la revendication 1, **caractérisé en ce que** l'élément d'écoulement sortant (5) est conçu pour introduire un écoulement d'air (4) en direction du sol (18) et/ou au voisinage du sol de la cabine intérieure (12) de l'avion (1).

3. Avion selon l'une des revendications 1 ou 2, contenant en outre au moins un élément de guidage d'air (6) avec une première extrémité (61) et avec une seconde extrémité (62), dans lequel
- la première extrémité (61) de l'élément de guidage d'air (6) est reliée avec le canal d'air frais, et
- la seconde extrémité (62) de l'élément de guidage d'air (6) est reliée avec l'élément d'écoulement sortant (5).

4. Avion selon l'une des revendications 2 ou 3, **caractérisé en ce que** l'élément de guidage d'air (6) est intégré dans le châssis de siège (25).

5. Avion selon l'une des revendications 1 à 4, **caractérisé en ce que** l'élément d'écoulement sortant (5) est intégré dans la surface d'assise (23) et/ou dans le dossier (22) et/ou dans l'accoudoir (24) du siège (2).

6. Avion selon l'une des revendications 1 à 5, **caractérisé en ce que** l'élément d'écoulement sortant (5) comprend un corps creux (53).

7. Avion selon la revendication 6, **caractérisé en ce que** le corps creux (53) est reliée avec au moins un canal d'air frais (14) via au moins une ouverture (51).

8. Avion selon l'une des revendications 6 à 7, **caractérisé en ce que** le corps creux (53) comprend une pluralité d'ouvertures de sortie (52).

9. Avion selon l'une des revendications 1 à 8, contenant en outre au moins un dispositif de commande (7) au moyen duquel la quantité d'air sortant de l'élément d'écoulement sortant (5) et/ou la température de l'air et/ou la vitesse d'écoulement est susceptible d'être influencée.

10. Avion selon l'une des revendications 1 à 9, contenant en outre au moins un système de mélange d'air (8) avec au moins une première entrée (81) à laquelle peut être amené de l'air venant du canal d'air vicié (15), et au moins une seconde entrée (82) à laquelle peut être amené de l'air frais, et au moins une sortie (83) qui est reliée avec le canal d'air frais (14).

11. Procédé pour la climatisation d'au moins une zone partielle de la cabine intérieure (12) d'un avion (1), dans lequel on amène de l'air frais à la cabine intérieure (12) au moyen d'au moins un élément d'écoulement sortant (5) et on aspire de l'air vicié au moins au niveau du plafond (19) de la cabine intérieure (12) via au moins un élément d'écoulement entrant, **caractérisé en ce que** l'élément d'écoulement sortant (5) fait partie d'un siège (2) qui est agencé dans la cabine intérieure (12) de l'avion (1), et on engendre au-dessous du siège un écoulement de refoulement.

12. Procédé selon la revendication 11, **caractérisé en ce que** l'on amène de l'air à l'élément d'écoulement sortant (5) via un élément de guidage d'air (6) qui fait partie du châssis de siège (25) du siège (2).

13. Procédé selon la revendication 11 ou 12, **caractérisé en ce que** l'on influence la quantité d'air sortant et/ou la température et/ou la vitesse au moyen d'un dispositif de commande (7)

14. Procédé selon l'une des revendications 11 à 13,
**caractérisé en ce que** l'écoulement d'air de l'élément d'écoulement sortant (5) est introduit de façon guidée en direction du sol et/ou au voisinage du sol.

15. Procédé selon la revendication 14, **caractérisé en ce que** l'écoulement d'air de l'élément d'écoulement sortant (5) est introduit dans une zone entre 0 cm et 30 cm au-dessus du sol de la cabine (18).
